# EUROPEAN PATENT APPLICATION

(11) **EP 4 796 296 A1**
(43) Date of publication of application: **26.08.2026**
(21) Application number: 23956030.3
(22) Date of filing: 17.10.2023
(51) Int. Cl.: B29C 65/16

(54) **WELDING METHOD, RESIN JOINT, AND POLYGONAL CASE**

(71) Applicant: JTEKT CORPORATION, Kariya-shi, Aichi 448-8652 (JP)
(72) Inventor: FUKADA, Daisuke, Kariya-shi, Aichi 448-8652 (JP); IWAZAKI, Tomoya, Kariya-shi, Aichi 448-8652 (JP); YAMAMOTO, Masashi, Kariya-shi, Aichi 448-8652 (JP)
(74) Representative: Winter, Brandl - Partnerschaft mbB
(86) International application number: PCT/JP2023/037526
(87) International publication number: WO 2025/083778

(57) **Abstract**

(Problem) To provide: a welding method with which laser welding can be reliably performed while limiting an increase in size; a resin joint; and a polygonal case. (Solution) A first resin member 2 and a second resin member 3 are welded by irradiation with laser light while the first resin member 2 and the second resin member 3 are under pressure. The first resin member 2 is a light-absorbing resin member that absorbs laser light, and the second resin member 3 is a light-transmitting resin member that transmits laser light. The second resin member 3 is formed to have a lower side inclined surface 31 inclined with respect to a direction of pressure, and the first resin member 2 is formed to have a facing surface 21 facing the lower side inclined surface 31 and coming into contact with the lower side inclined surface 31 due to the pressure. In a welding step, the first resin member 2 and the second resin member 3 are welded together through irradiation with laser light by directing the laser light to a contact site 53 between the lower side inclined surface 31 and the facing surface 21 from a direction intersecting the direction of pressure so that the laser light passes through the second resin member 3.

## Description

### Technical Field

The present invention relates to a welding method for welding a plurality of resin members, a resin joined assembly, and a polygonal case.

### Background Art

Resin joined assemblies formed by joining a plurality of resin members by laser welding have been used for various applications.

A motor described in Patent Literature 1 includes a resin housing that houses a rotor and a stator, and a resin cover that covers the top of the housing. The cover is joined to the housing by laser welding. The cover includes a disc-shaped top plate portion and a cylindrical peripheral wall portion that are integral with each other. The peripheral wall portion surrounds the outer periphery of an upper tubular portion of the housing. The weld portion formed by laser welding is continuously formed in an annular shape between the outer peripheral surface of the upper tubular portion and the inner peripheral surface of the peripheral wall portion.

In a vehicle fluid filter device of Patent Literature 2, an upper case component made of a laser-transmitting resin and a lower case component made of a non-laser-transmitting resin are joined by laser welding to form a resin case that houses a filter element. Laser welding is performed by bringing an upper flange portion provided on the upper case component and a lower flange portion provided on the lower case component into contact with each other and radiating a laser beam from above the upper flange portion toward the lower flange portion.

### Citation List

### Patent Literature

Patent Literature 1: JP 2021-58001 A
Patent Literature 2: JP 2006-231875 A

### Summary of Invention

### Technical Problem

In the device described in Patent Literature 1, there is a possibility that laser welding will not be performed properly in a space that is generated by a difference between the outside diameter of the upper tubular portion of the housing and the bore diameter of the peripheral wall portion of the cover. In the device described in Patent Literature 2, the provision of the upper flange portion and the lower flange portion increases the size of the resin case, which may reduce the ease of mounting on a vehicle.

Therefore, an object of the present invention is to provide a welding method, a resin joined assembly, and a polygonal case in which laser welding can be reliably performed while suppressing an increase in size.

### Solution to Problem

To achieve the above object, the present invention provides a welding method for welding a light-transmitting resin member and a light-absorbing resin member by radiating a laser beam while subjecting the light-transmitting resin member and the light-absorbing resin member to pressurization into contact with each other. One member out of the light-transmitting resin member and the light-absorbing resin member includes an inclined surface that is inclined with respect to a direction of the pressurization. The other member includes a facing surface that faces the inclined surface. The welding method includes welding the light-transmitting resin member and the light-absorbing resin member by bringing the inclined surface and the facing surface into contact with each other by the pressurization of the light-transmitting resin member and the light-absorbing resin member, and radiating the laser beam through the light-transmitting resin member toward a contact portion between the inclined surface and the facing surface in a direction intersecting the direction of the pressurization.

To achieve the above object, the present invention provides a resin joined assembly including a light-transmitting resin member and a light-absorbing resin member that are joined together by melting part of the light-transmitting resin member and part of the light-absorbing resin member by radiation of a laser beam. A joining portion where the light-transmitting resin member and the light-absorbing resin member are joined together is formed while being inclined with respect to a stacking direction of the light-transmitting resin member and the light-absorbing resin member.

To achieve the above object, the present invention provides a polygonal case including a light-transmitting resin member and a light-absorbing resin member that are joined together by melting part of the light-transmitting resin member and part of the light-absorbing resin member by radiation of a laser beam. The polygonal case includes a polygonal bottom plate portion and a plurality of side plate portions extending from the bottom plate portion in a direction perpendicular to the bottom plate portion. A joining portion where the light-transmitting resin member and the light-absorbing resin member are joined together is formed in each of the plurality of side plate portions while being inclined with respect to the direction perpendicular to the bottom plate portion.

### Advantageous Effects of Invention

With the welding method, the resin joined assembly, and the polygonal case of the present invention, laser welding can be reliably performed while suppressing an increase in size.

### Brief Description of Drawings

(FIG. 1) FIG. 1 is an external view showing a battery pack module including a polygonal case according to a first embodiment.
(FIG. 2) FIG. 2 is an exploded perspective view of the polygonal case.
(FIG. 3) FIG. 3 is a sectional view of the battery pack module.
(FIG. 4) FIG. 4 is an enlarged view of part A in FIG. 3.
(FIG. 5) FIG. 5 is an enlarged view of part B in FIG. 3.
(FIG. 6) FIG. 6 is a sectional view showing part of each of a first resin member and a second resin member before the first resin member and the second resin member are welded together.
(FIG. 7) FIG. 7 is a sectional view showing a state in which the first resin member and the second resin member are pressurized in an up-down direction to come into contact with each other.
(FIG. 8) FIG. 8 is a sectional view showing part of each of the second resin member and a third resin member before the second resin member and the third resin member are welded together.
(FIG. 9) FIG. 9 is a sectional view showing a state in which the second resin member and the third resin member are pressurized in the up-down direction to come into contact with each other.
(FIG. 10) FIG. 10 is an explanatory diagram showing a welding step of welding the second resin member to the first resin member and the third resin member by radiating laser beams.
(FIG. 11) FIG. 11 is an explanatory diagram of a first modification of the first embodiment.
(FIG. 12) FIG. 12 is an explanatory diagram of a second modification of the first embodiment.
(FIG. 13) FIG. 13 is an explanatory diagram of a third modification of the first embodiment.
(FIG. 14) FIG. 14 is an explanatory diagram showing a welding step during manufacture of a polygonal case according to a second embodiment.
(FIG. 15) FIG. 15 is an enlarged view showing an enlarged part of FIG. 14.

### Description of Embodiments

### (First Embodiment)

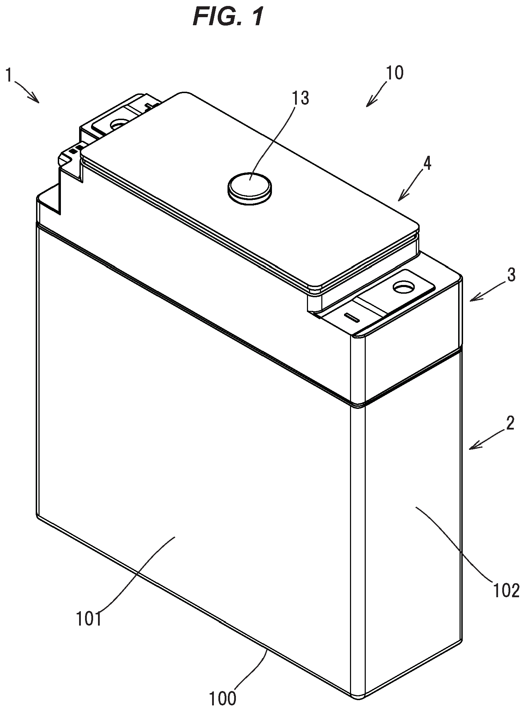

A first embodiment of the present invention will be described with reference to FIGS. 1 to 10. The embodiment described below is given as a preferred specific example for carrying out the present invention, and includes portions that specifically exemplify various technical matters that are technically preferable, but the technical scope of the present invention is not limited to this specific embodiment.

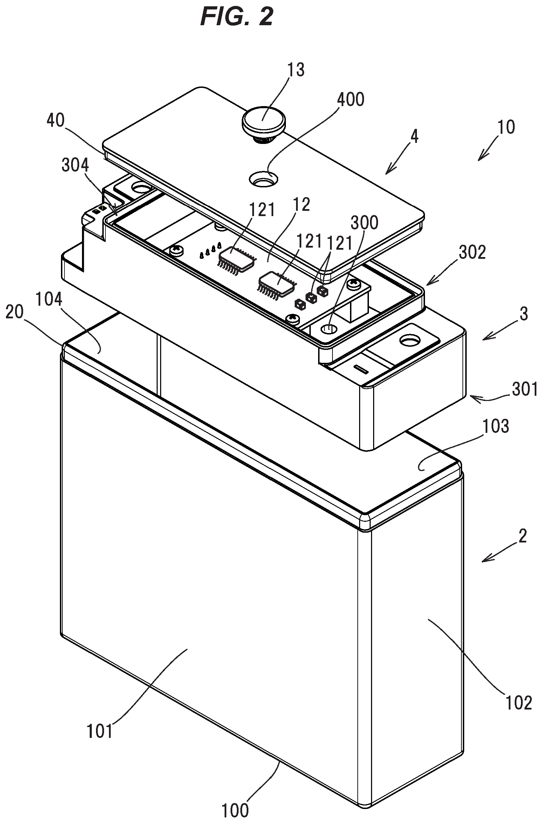

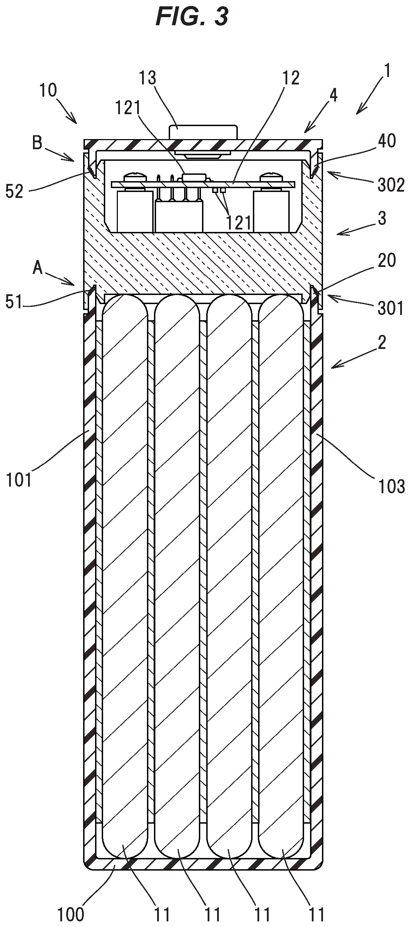

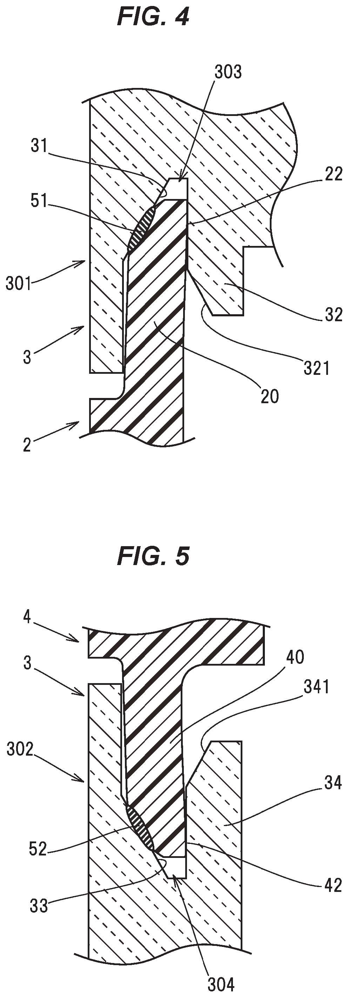

FIG. 1 is an external view showing a battery pack module 1 including a polygonal case 10 according to the first embodiment. FIG. 2 is an exploded perspective view of the polygonal case 10. FIG. 3 is a sectional view of the battery pack module 1. FIG. 4 is an enlarged view of part A in FIG. 3. FIG. 5 is an enlarged view of part B in FIG. 3. The battery pack module 1 is used, for example, as a power source for a vehicle including an electric motor as a driving source for traveling.

The battery pack module 1 includes the resin polygonal case 10, a plurality of pouch-shaped batteries 11 (shown in FIG. 3), and a circuit board 12 on which a plurality of electronic components 121 is mounted. The plurality of pouch-shaped batteries 11 and the circuit board 12 are housed in the polygonal case 10. The polygonal case 10 is one form of the resin joined assembly of the present invention. The pouch-shaped battery 11 is a secondary battery that can be charged and discharged, and is more specifically a lithium-ion battery or a lithium-ion capacitor that has a laminate film as an outer casing.

In the present embodiment, four pouch-shaped batteries 11 are housed in the polygonal case 10, and cathodes and anodes of the pouch-shaped batteries 11 are connected in series. The plurality of electronic components 121 such as ICs, resistors, and capacitors for monitoring and controlling the charge state, current, and temperature of each pouch-shaped battery 11 is mounted on the circuit board 12.

The polygonal case 10 includes a polygonal bottom plate portion 100 and a plurality of side plate portions 101 to 104 extending from the bottom plate portion 100 in a direction perpendicular to the bottom plate portion 100. In the present embodiment, the bottom plate portion 100 has a rectangular shape. Hereinafter, the direction perpendicular to the bottom plate portion 100 will be referred to as an up-down direction, and the direction perpendicular to the up-down direction and perpendicular to the thickness direction of each of the side plate portions 101 to 104 will be referred to as a lateral direction. However, the up-down direction and the lateral direction do not necessarily correspond to the vertical direction and the horizontal direction when the battery pack module 1 is in use.

Among the plurality of side plate portions 101 to 104, the two side plate portions 101, 103 extending in the up-down direction from the long side portions of the bottom plate portion 100 are wider in the lateral direction than the other two side plate portions 102, 104 extending in the up-down direction from the short side portions of the bottom plate portion 100. The four pouch-shaped batteries 11 are arranged between the two side plate portions 101, 103 that are wide in the lateral direction. FIG. 3 shows cross sections of the bottom plate portion 100 and the two side plate portions 101, 103 along the up-down direction.

In the present embodiment, the polygonal case 10 has a three-piece structure, and is composed of first to third resin members 2 to 4. The first to third resin members 2 to 4 are arranged in the up-down direction, and the second resin member 3 is disposed between the first resin member 2 and the third resin member 4. The first resin member 2 and the second resin member 3, and the second resin member 3 and the third resin member 4 are partially welded together by radiation of laser beams in an airtight manner.

The bottom plate portion 100 and the plurality of side plate portions 101 to 104 of the polygonal case 10 are formed from the first resin member 2. The second resin member 3 is disposed contiguously with the ends of the side plate portions 101 to 104 of the first resin member 2 that are opposite to the bottom plate portion 100. The third resin member 4 has a rectangular shape with a longer side shorter than that of the bottom plate portion 100, and covers the upper opening of the second resin member 3.

As shown in FIG. 2, the second resin member 3 has a communication hole 300 through which the internal space of the first resin member 2 communicates with the internal space of the second resin member 3. The third resin member 4 has a through hole 400, and the through hole 400 is closed by a cap 13. The cap 13 suppresses entry of foreign matter into the polygonal case 10 through the through hole 400. When the difference in air pressure between the inside and outside of the polygonal case 10 increases, air flows through the through hole 400, and the difference in air pressure is reduced.

In the present embodiment, the second resin member 3 is a light-transmitting resin member made of a light-transmitting resin with light transmittance that allows a laser beam to pass. Each of the first resin member 2 and the third resin member 4 is a light-absorbing resin member made of a light-absorbing resin with light absorption properties to absorb a laser beam. That is, in the present embodiment, the polygonal case 10 is composed of one light-transmitting resin member (second resin member 3) and two light-absorbing resin members (first resin member 2 and third resin member 4). The one light-transmitting resin member (second resin member 3) is sandwiched between the two light-absorbing resin members (first resin member 2 and third resin member 4).

The resin material of the second resin member 3 and the resin materials of the first resin member 2 and the third resin member 4 desirably have high compatibility, and are more desirably made of the same type of resin. The resin materials of the first to third resin members 2 to 4 have high strength and low moisture absorption to withstand vibrations and shocks when the vehicle is traveling. In the present embodiment, the second resin member 3 is made of PBT (polybutylene terephthalate), and the first resin member 2 and the third resin member 4 are made of PBT containing a laser-absorbing material such as carbon black. However, the resin materials of the first to third resin members 2 to 4 are not limited to PBT, and for example, PPS (polyphenylene sulfide) or PP (polypropylene) may also be used.

FIG. 4 shows a joining portion 51 between the first resin member 2 and the second resin member 3 and the surrounding portion. The joining portion 51 is a portion where part of the first resin member 2 and part of the second resin member 3 are fused together and solidified. In the cross section shown in FIG. 4, the joining portion 51 has a thin oblong shape that is inclined with respect to the up-down direction that is a stacking direction of the first resin member 2 and the second resin member 3, and is formed in a loop shape across the plurality of side plate portions 101 to 104.

FIG. 5 shows a joining portion 52 between the second resin member 3 and the third resin member 4 and the surrounding portion. The joining portion 52 is a portion where part of the second resin member 3 and part of the third resin member 4 are fused together and solidified. In the cross section shown in FIG. 5, the joining portion 52 has a thin oblong shape that is inclined with respect to the up-down direction that is a stacking direction of the second resin member 3 and the third resin member 4, and is formed in a loop shape along the peripheral edge of the third resin member 4.

The welding between the first resin member 2 and the second resin member 3 and the welding between the second resin member 3 and the third resin member 4 are performed by sandwiching the second resin member 3 between the first resin member 2 and the third resin member 4 and pressurizing the first to third resin members 2 to 4 in the up-down direction. The second resin member 3 includes a lower weld portion 301 at the end near the first resin member 2, and an upper weld portion 302 at the end near the third resin member 4.

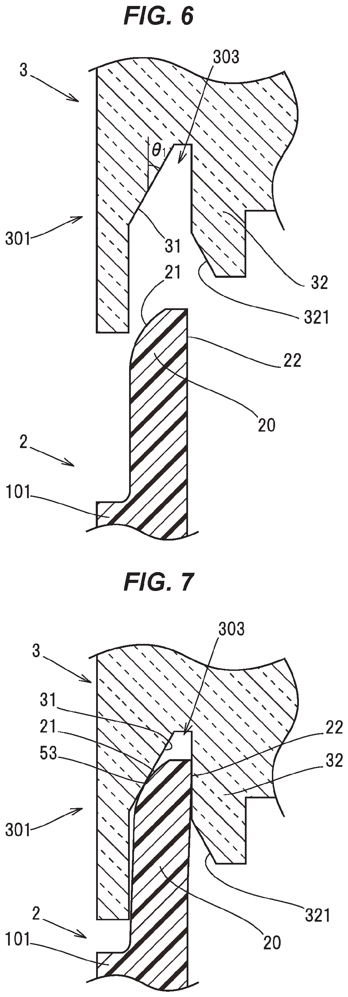

Next, a welding method for welding the second resin member 3 to the first resin member 2 and the third resin member 4 will be described in detail with reference to FIGS. 6 to 10.

FIG. 6 is a sectional view showing part of each of the first resin member 2 and the second resin member 3 before the first resin member 2 and the second resin member 3 are welded together. FIG. 7 is a sectional view showing a state in which the first resin member 2 and the second resin member 3 are pressurized in the up-down direction to come into contact with each other. FIGS. 6 and 7 show cross sections perpendicular to the lateral direction of the side plate portion 101 of the polygonal case 10.

The lower weld portion 301 of the second resin member 3 includes a tapered lower inclined surface 31 that is inclined with respect to the direction of pressurization during welding. The lower inclined surfaces 31 are formed in a loop shape corresponding to the plurality of side plate portions 101 to 104, and are oriented inward of the polygonal case 10. In the example shown in FIG. 6, an inclination angle θ₁ of the lower inclined surface 31 with respect to the pressurization direction (up-down direction) is 30°. However, the inclination angle θ₁ is not limited to 30°, but may be, for example, 20° or more and 70° or less.

The lower weld portion 301 of the second resin member 3 includes a lower wall portion 32 juxtaposed to the lower inclined surface 31 along a direction perpendicular to the pressurization direction. A space 303 is formed between the lower inclined surface 31 and the lower wall portion 32. The lower wall portion 32 is formed to protrude downward (toward the bottom plate portion 100) from the upper end of the lower inclined surface 31. A guide surface 321 for facilitating guiding of a weld portion 20 of the first resin member 2 described next into the space 303 is formed at the tip of the lower wall portion 32 and is inclined with respect to the up-down direction.

The weld portion 20 of the first resin member 2 to be welded to the lower weld portion 301 of the second resin member 3 has a facing surface 21 that faces the lower inclined surface 31. The facing surface 21 has a projecting shape that projects toward the lower inclined surface 31 of the second resin member 3. More specifically, the facing surface 21 is formed in a convex shape, and the shape of the facing surface 21 in the cross section shown in FIGS. 6 and 7 is an arc shape.

When the first resin member 2 and the second resin member 3 are pressurized, the weld portion 20 that is the portion where the facing surface 21 is formed in the first resin member 2 is disposed between the lower inclined surface 31 and the lower wall portion 32, and part of the lower inclined surface 31 of the second resin member 3 and part of the facing surface 21 of the first resin member 2 come into linear contact with each other at a contact portion 53.

The weld portion 20 of the first resin member 2 has a contact surface 22 that faces the lower wall portion 32 of the second resin member 3 in the thickness direction and comes into contact with the lower wall portion 32 when the first resin member 2 is elastically deformed by pressurization. The lower wall portion 32 restricts warping of the weld portion 20 in the thickness direction due to pressurization of the facing surface 21 coming into contact with the lower inclined surface 31.

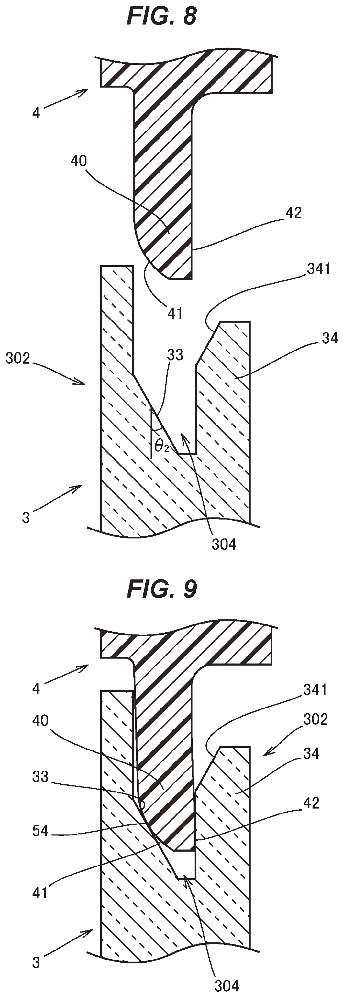

FIG. 8 is a sectional view showing part of each of the second resin member 3 and the third resin member 4 before the second resin member 3 and the third resin member 4 are welded together. FIG. 9 is a sectional view showing a state in which the second resin member 3 and the third resin member 4 are pressurized in the up-down direction to come into contact with each other.

The upper weld portion 302 of the second resin member 3 includes a tapered upper inclined surface 33 that is inclined with respect to the direction of pressurization (up-down direction) during welding. The upper inclined surface 33 is oriented inward of the polygonal case 10. In FIG. 8, an inclination angle θ₂ of the upper inclined surface 33 with respect to the pressurization direction is 30°. However, the inclination angle θ₂ is not limited to 30°, but may be, for example, 20° or more and 70° or less.

The upper weld portion 302 of the second resin member 3 includes an upper wall portion 34 juxtaposed to the upper inclined surface 33 along a direction perpendicular to the pressurization direction. A space 304 is formed between the upper inclined surface 33 and the upper wall portion 34. The upper wall portion 34 is formed to protrude upward (toward the third resin member 4) from the lower end of the upper inclined surface 33. A guide surface 341 for facilitating guiding of a weld portion 40 of the third resin member 4 described next into the space 304 is formed at the tip of the upper wall portion 34 and is inclined with respect to the up-down direction.

The weld portion 40 of the third resin member 4 to be welded to the upper weld portion 302 of the second resin member 3 has a facing surface 41 that faces the upper inclined surface 33. The facing surface 41 has a projecting shape that projects toward the upper inclined surface 33 of the second resin member 3. More specifically, the facing surface 41 is formed in a convex shape, and the shape of the facing surface 41 in the cross section shown in FIGS. 8 and 9 is an arc shape.

When the second resin member 3 and the third resin member 4 are pressurized, the weld portion 40 that is the portion where the facing surface 41 is formed in the third resin member 4 is disposed between the upper inclined surface 33 and the upper wall portion 34, and part of the upper inclined surface 33 of the second resin member 3 and part of the facing surface 41 of the third resin member 4 come into linear contact with each other at a contact portion 54.

The weld portion 40 of the third resin member 4 has a contact surface 42 that faces the upper wall portion 34 of the second resin member 3 in the thickness direction and comes into contact with the upper wall portion 34 when the third resin member 4 is elastically deformed by pressurization. The upper wall portion 34 restricts warping of the weld portion 40 in the thickness direction due to pressurization of the facing surface 41 coming into contact with the upper inclined surface 33.

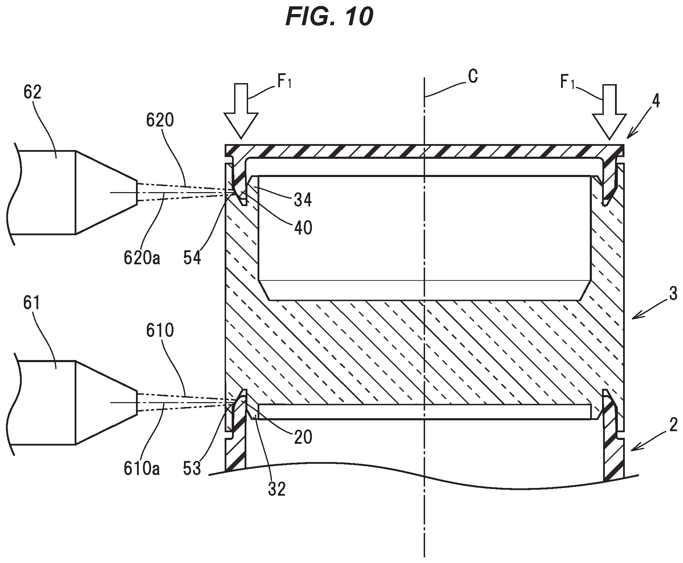

FIG. 10 is an explanatory diagram showing a welding step of welding the second resin member 3 to the first resin member 2 and the third resin member 4 by radiating laser beams. In this welding step, laser beams 610, 620 are radiated onto the first to third resin members 2 to 4 from portions outward of the polygonal case 10, thereby simultaneously welding the first resin member 2 to the second resin member 3 and welding the second resin member 3 to the third resin member 4. The first to third resin members 2 to 4 are molded in advance by an injection molding step performed before the welding step. In FIG. 10, the direction of pressurization of the first to third resin members 2 to 4 is indicated by arrow F₁.

The welding of the first resin member 2 and the second resin member 3 is performed by pressurizing the first resin member 2 and the second resin member 3 in the up-down direction, bringing part of the lower inclined surface 31 of the second resin member 3 and part of the facing surface 21 of the first resin member 2 into linear contact with each other at the contact portion 53, and then radiating the laser beam 610 from a first laser head 61 through the second resin member 3 toward the contact portion 53 in a direction intersecting the pressurization direction.

The welding of the second resin member 3 and the third resin member 4 is performed by pressurizing the second resin member 3 and the third resin member 4 in the up-down direction, bringing part of the upper inclined surface 33 of the second resin member 3 and part of the facing surface 41 of the third resin member 4 into linear contact with each other at the contact portion 54, and then radiating the laser beam 620 from a second laser head 62 through the second resin member 3 toward the contact portion 54 in a direction intersecting the pressurization direction.

In the example shown in FIG. 10, optical axes 610a, 620a of the laser beams 610, 620 are perpendicular to the up-down direction, but are not limited to this example. For example, the laser beam 610 may be radiated from the first laser head 61 such that the optical axis 610a is perpendicular to the lower inclined surface 31 of the second resin member 3, and the laser beam 620 may be radiated from the second laser head 62 such that the optical axis 620a is perpendicular to the upper inclined surface 33 of the second resin member 3.

When the laser beam 610 radiated from the first laser head 61 impinges on the contact portion 53 and the surrounding portion, part of the first resin member 2 is melted into a molten resin, and part of the second resin member 3 is melted by heat of this molten resin and fused with part of the first resin member 2. The portion where the first resin member 2 and the second resin member 3 are fused together gradually spreads from the contact portion 53 along the lower inclined surface 31 depending on the radiation time or the number of radiations of the laser beam 610, and is then cooled and solidified, thereby forming the joining portion 51 between the first resin member 2 and the second resin member 3.

When the laser beam 620 radiated from the second laser head 62 impinges on the contact portion 54 and the surrounding portion, part of the third resin member 4 is melted into a molten resin, and part of the second resin member 3 is melted by heat of this molten resin and fused with part of the third resin member 4. The portion where the second resin member 3 and the third resin member 4 are fused together gradually spreads from the contact portion 54 along the upper inclined surface 33 depending on the radiation time or the number of radiations of the laser beam 620, and is then cooled and solidified, thereby forming the joining portion 52 between the second resin member 3 and the third resin member 4.

In the welding step, the first to third resin members 2 to 4 are clamped in the up-down direction by a pressurizing jig to pressurize the first resin member 2 and the second resin member 3 and pressurize the second resin member 3 and the third resin member 4. In the welding step, the first and second laser heads 61, 62 and the first to third resin members 2 to 4 are rotated relative to each other about a central axis C of the polygonal case 10 while radiating the laser beams 610, 620. During this relative rotation, the distance between the first and second laser heads 61, 62 and the first to third resin members 2 to 4 is adjusted such that the distance between the first and second laser heads 61, 62 and the first to third resin members 2 to 4 reaches an appropriate distance depending on the focal lengths of the laser beams 610, 620. Alternatively, for example, the focal lengths of the laser beams 610, 620 are adjusted by adjusting the positions of lenses in the first and second laser heads 61, 62. The intensity profile of the laser beams 610, 620 is preferably a top hat shape rather than a Gaussian shape.

By the relative rotation between the first and second laser heads 61, 62 and the first to third resin members 2 to 4, the first and second laser heads 61, 62 make at least one loop around the first to third resin members 2 to 4. When the molten resins melted by the radiation of the laser beams 610, 620 are solidified, the welding step is completed.

According to the first embodiment described above, the laser beams 610, 620 are radiated with the first to third resin members 2 to 4 pressurized in the up-down direction. Therefore, the welding can be performed in the state in which the lower inclined surface 31 of the second resin member 3 and the facing surface 21 of the first resin member 2 are reliably in contact with each other and the upper inclined surface 33 of the second resin member 3 and the facing surface 41 of the third resin member 4 are reliably in contact with each other. That is, even if shape irregularity such as warping occurs in the first to third resin members 2 to 4 during the injection molding step, the first to third resin members 2 to 4 are elastically deformed by the pressure applied during the pressurization such that the lower inclined surface 31 and the upper inclined surface 33 come into contact with the facing surfaces 21, 41, and the laser beams 610, 620 can be radiated toward the contact portions 53, 54 where these surfaces come into contact with each other. Thus, the welding can be performed reliably. Since there is no need to provide, for example, a flange portion for welding as in the device described in Patent Literature 2, the polygonal case 10 can be downsized.

### (First Modification)

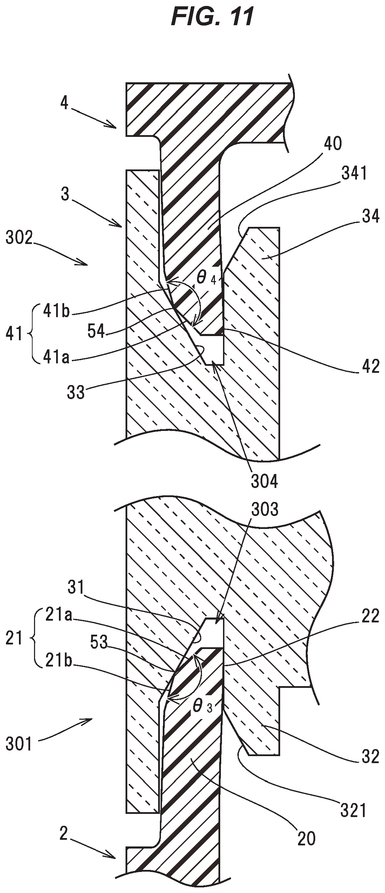

Next, a first modification of the first embodiment will be described with reference to FIG. 11. The first embodiment illustrates the case where the facing surface 21 of the weld portion 20 of the first resin member 2 is formed in the convex shape. In the first modification shown in FIG. 11, the facing surface 21 of the weld portion 20 of the first resin member 2 is composed of a pair of inclined surfaces 21a, 21b, and the corner between the pair of inclined surfaces 21a, 21b comes into contact with the lower inclined surface 31. The inclination angle of one inclined surface 21a located at the deeper side of the space 303 out of the pair of inclined surfaces 21a, 21b with respect to the up-down direction is larger than the inclination angle θ₁ of the lower inclined surface 31 (see FIG. 6), and the inclination angle of the other inclined surface 21b with respect to the up-down direction is smaller than the inclination angle θ₁ of the lower inclined surface 31. An angle θ₃ between the pair of inclined surfaces 21a, 21b is an obtuse angle, and is, for example, 120° or more and 170° or less.

The first embodiment illustrates the case where the facing surface 41 of the weld portion 40 of the third resin member 4 is formed in the convex shape. In the first modification shown in FIG. 11, the facing surface 41 of the weld portion 40 of the third resin member 4 is composed of a pair of inclined surfaces 41a, 41b, and the corner between the pair of inclined surfaces 41a, 41b comes into contact with the upper inclined surface 33. The inclination angle of one inclined surface 41a located at the deeper side of the space 304 out of the pair of inclined surfaces 41a, 41b with respect to the up-down direction is larger than the inclination angle θ₂ of the upper inclined surface 33 (see FIG. 8), and the inclination angle of the other inclined surface 41b with respect to the up-down direction is smaller than the inclination angle θ₂ of the upper inclined surface 33. An angle θ₄ between the pair of inclined surfaces 41a, 41b is an obtuse angle, and is, for example, 120° or more and 170° or less.

When welding the second resin member 3 to the first resin member 2 and the third resin member 4 in the first modification, as in the first embodiment, laser welding is performed by pressurizing the first to third resin members 2 to 4 in the up-down direction and simultaneously radiating the laser beams toward the contact portion 53 between the lower inclined surface 31 of the second resin member 3 and the facing surface 21 of the first resin member 2 and the contact portion 54 between the upper inclined surface 33 of the second resin member 3 and the facing surface 41 of the third resin member 4.

The first modification provides the same effects as those in the first embodiment.

### (Second Modification)

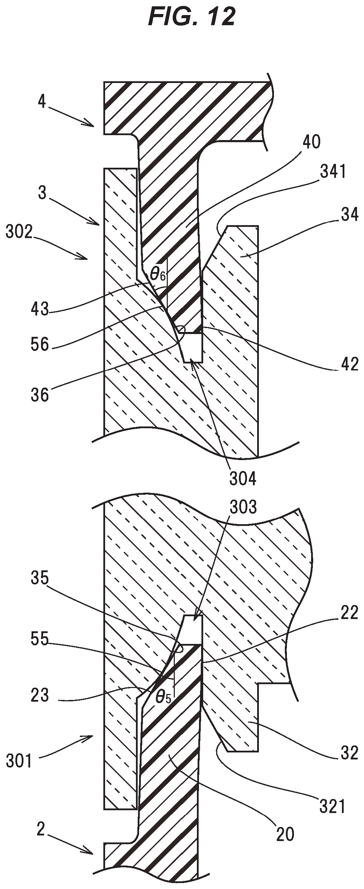

Next, a second modification of the first embodiment will be described with reference to FIG. 12. The first embodiment illustrates the case where the lower inclined surface 31 that is inclined at the constant inclination angle θ₁ with respect to the up-down direction is formed on the lower weld portion 301 of the second resin member 3 and the facing surface 21 of the weld portion 20 of the first resin member 2 that is formed in the convex shape comes into contact with the lower inclined surface 31. In the second modification, an inclined surface 23 that is inclined at a constant inclination angle θ₅ with respect to the up-down direction is formed on the weld portion 20 of the first resin member 2, and a facing surface 35 that is formed in a convex shape and comes into contact with the inclined surface 23 is formed on the lower weld portion 301 of the second resin member 3.

The first embodiment illustrates the case where the upper inclined surface 33 that is inclined at the constant inclination angle θ₂ with respect to the up-down direction is formed on the upper weld portion 302 of the second resin member 3 and the facing surface 41 of the weld portion 40 of the third resin member 4 that is formed in the convex shape comes into contact with the upper inclined surface 33. In the second modification, an inclined surface 43 that is inclined at a constant inclination angle θ₆ with respect to the up-down direction is formed on the weld portion 40 of the third resin member 4, and a facing surface 36 that is formed in a convex shape and comes into contact with the inclined surface 43 is formed on the upper weld portion 302 of the second resin member 3.

When welding the second resin member 3 to the first resin member 2 and the third resin member 4 in the second modification, laser welding is performed by pressurizing the first to third resin members 2 to 4 in the up-down direction and simultaneously radiating the laser beams toward a contact portion 55 between the inclined surface 23 of the first resin member 2 and the facing surface 35 of the second resin member 3 and a contact portion 56 between the inclined surface 43 of the third resin member 4 and the facing surface 36 of the second resin member 3.

The second modification provides the same effects as those in the first embodiment.

### (Third Modification)

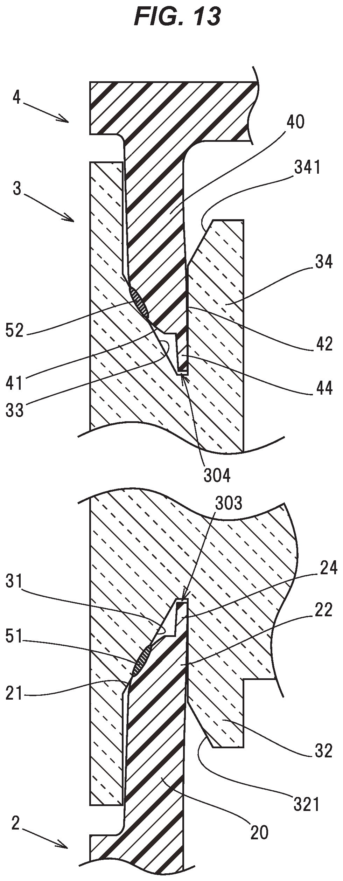

Next, a third modification of the first embodiment will be described with reference to FIG. 13. In the third modification, the weld portion 20 of the first resin member 2 includes a light-blocking portion 24 that blocks a leakage of the laser beam radiated in the welding step. The weld portion 40 of the third resin member 4 includes a light-blocking portion 44 that blocks a leakage of the laser beam radiated in the welding step. The other configurations are the same as those in the first embodiment.

The light-blocking portion 24 of the first resin member 2 is formed to protrude upward to the deeper side of the space 303 compared to the facing surface 21 of the weld portion 20. The light-blocking portion 44 of the third resin member 4 is formed to protrude downward to the deeper side of the space 304 compared to the facing surface 41 of the weld portion 40. The light-blocking portions 24, 44 block the leakages of the laser beams that have deviated from the joining portions 51, 52 with the second resin member 3 to suppress the occurrence of a case where the laser beams impinge on members inside the second resin member 3 (e.g., wiring members such as busbars connected to the cathodes or anodes of the pouch-shaped batteries 11).

According to the third modification, heating of the members inside the second resin member 3 by the impinging laser beams is suppressed in addition to the effects of the first embodiment. The configuration of the third modification (light-blocking portions 24, 44) may be added to the configuration of the first modification or the second modification.

### (Second Embodiment)

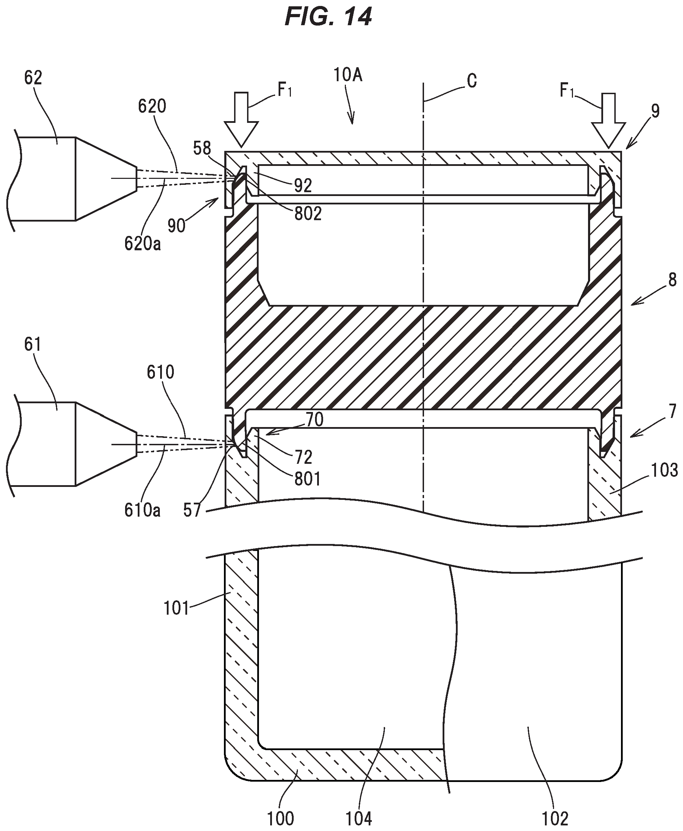

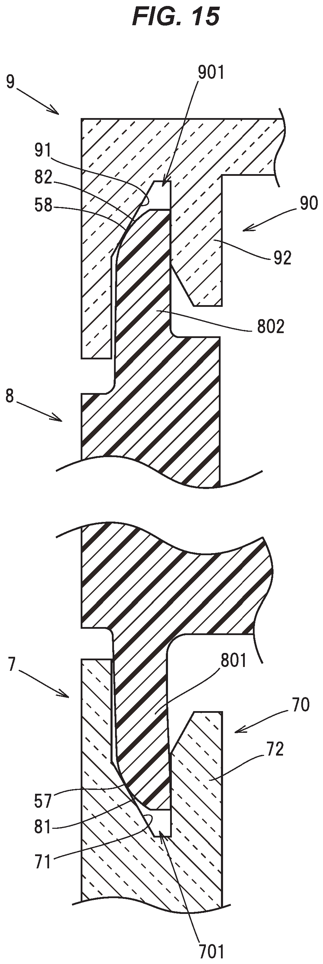

Next, a second embodiment of the present invention will be described with reference to FIGS. 14 and 15. FIG. 14 is an explanatory diagram showing a welding step during manufacture of a polygonal case 10A according to the second embodiment. FIG. 15 is an enlarged view showing an enlarged part of FIG. 14.

The first embodiment illustrates the case where the second resin member 3 is the light-transmitting resin member and the first resin member 2 and the third resin member 4 are the light-absorbing resin members. In the second embodiment, a second resin member 8 is a light-absorbing resin member, and a first resin member 7 and a third resin member 9 are light-transmitting resin members. That is, in the present embodiment, the polygonal case 10A is composed of one light-absorbing resin member (second resin member 8) and two light-transmitting resin members (first resin member 7 and third resin member 9). The one light-absorbing resin member (second resin member 8) is sandwiched between the two light-transmitting resin members (first resin member 7 and third resin member 9).

The polygonal case 10A includes the polygonal bottom plate portion 100 and the plurality of side plate portions 101 to 104 similarly to the polygonal case 10 of the first embodiment. The second resin member 8 includes a lower weld portion 801 at the end near the first resin member 7, and an upper weld portion 802 at the end near the third resin member 9. The first resin member 7 includes a weld portion 70 that is welded to the lower weld portion 801 of the second resin member 8. The third resin member 9 includes a weld portion 90 that is welded to the upper weld portion 802 of the second resin member 8. As in the first embodiment, the first to third resin members 7 to 9 are welded by radiating the laser beams 610, 620 while being pressurized in the up-down direction.

The weld portion 70 of the first resin member 7 includes an inclined surface 71 that is inclined with respect to the pressurization direction (up-down direction), and a wall portion 72 juxtaposed to the inclined surface 71 along a direction perpendicular to the pressurization direction. The lower weld portion 801 of the second resin member 8 is disposed in a space 701 between the inclined surface 71 and the wall portion 72. The lower weld portion 801 of the second resin member 8 has a facing surface 81 that faces the inclined surface 71, and the inclined surface 71 and the facing surface 81 come into contact with each other by pressurization.

The facing surface 81 has a projecting shape that projects toward the inclined surface 71. When the first resin member 7 and the second resin member 8 are pressurized in a direction in which they approach each other, part of the inclined surface 71 and part of the facing surface 81 come into linear contact with each other. The wall portion 72 restricts warping of the lower weld portion 801 in the thickness direction due to pressurization of the facing surface 81 coming into contact with the inclined surface 71.

The weld portion 90 of the third resin member 9 includes an inclined surface 91 that is inclined with respect to the pressurization direction, and a wall portion 92 juxtaposed to the inclined surface 91 along a direction perpendicular to the pressurization direction. The upper weld portion 802 of the second resin member 8 is disposed in a space 901 between the inclined surface 91 and the wall portion 92. The upper weld portion 802 of the second resin member 8 has a facing surface 82 that faces the inclined surface 91, and the inclined surface 91 and the facing surface 82 come into contact with each other by pressurization.

The facing surface 82 has a projecting shape that projects toward the inclined surface 91. When the second resin member 8 and the third resin member 9 are pressurized in a direction in which they approach each other, part of the inclined surface 91 and part of the facing surface 82 come into linear contact with each other. The wall portion 92 restricts warping of the upper weld portion 802 in the thickness direction due to pressurization of the facing surface 82 coming into contact with the inclined surface 91.

In a welding step of welding the first to third resin members 7 to 9, the laser beams 610, 620 are radiated onto the first to third resin members 7 to 9 from portions outward of the polygonal case 10A, and the first and second laser heads 61, 62 and the first to third resin members 7 to 9 are rotated relative to each other about the central axis C of the polygonal case 10A, thereby simultaneously welding the first resin member 7 to the second resin member 8 and welding the second resin member 8 to the third resin member 9.

The first laser head 61 radiates the laser beam 610 in a direction intersecting the pressurization direction toward a contact portion 57 between the inclined surface 71 of the first resin member 7 and the facing surface 81 of the second resin member 8. The laser beam 610 passes through the first resin member 7 and impinges on the facing surface 81 of the lower weld portion 801 of the second resin member 8. Thus, part of the second resin member 8 is melted into a molten resin, part of the first resin member 7 is melted by heat of this molten resin, and part of the first resin member 7 and part of the second resin member 8 are fused together.

The second laser head 62 radiates the laser beam 620 in a direction intersecting the pressurization direction toward a contact portion 58 between the inclined surface 91 of the third resin member 9 and the facing surface 82 of the second resin member 8. The laser beam 620 passes through the third resin member 9 and impinges on the facing surface 82 of the upper weld portion 802 of the second resin member 8. Thus, part of the second resin member 8 is melted into a molten resin, part of the third resin member 9 is melted by heat of this molten resin, and part of the third resin member 9 and part of the second resin member 8 are fused together.

The second embodiment provides the same effects as those in the first embodiment. The configurations of the first to third modifications of the first embodiment may be applied to the second embodiment.

### (Appendices)

Although the present invention has been described above based on the first and second embodiments and the modifications, the embodiments and the modifications do not limit the invention according to the claims. It should also be noted that not all of the combinations of the features described in the embodiments and the modifications are essential to the means for solving the problem according to the invention. The present invention can be modified as appropriate by omitting part of the configurations or by adding or replacing configurations without departing from the spirit and scope of the invention. Further, part of the configurations of the plurality of embodiments described above can be combined with each other, and can also be modified, for example, as follows.

In the above embodiments, the configurations and the welding methods of the polygonal cases 10, 10A have been described as the examples of the resin joined assembly. However, the welding method of the present invention is not limited to those of the polygonal cases 10, 10A and can be used as a manufacturing method for various resin products. The above embodiments illustrate the case where each of the polygonal cases 10, 10A has the three-piece structure, but the present invention is not limited to this. The present invention is also applicable to manufacture of a resin joined assembly having a two-piece structure and formed by welding one light-transmitting resin member and one light-absorbing resin member. The present invention is also applicable to manufacture of a resin joined assembly having a structure in which a plurality of light-transmitting resin members and a plurality of light-absorbing resin members that are disposed alternately are welded together.

The first embodiment illustrates the case where the lower inclined surface 31 and the upper inclined surface 33 are inclined at the constant angles with respect to the up-down direction, but the present invention is not limited to this. For example, the lower inclined surface 31 and the upper inclined surface 33 may be curved surfaces that are curved with curvatures smaller than the curvatures of the facing surfaces 21, 41. Similarly, in the second embodiment, the inclined surfaces 71, 91 may be curved surfaces that are curved with curvatures smaller than the curvatures of the facing surfaces 81, 82.

### Reference Signs List

10, 10A POLYGONAL CASE (RESIN JOINED ASSEMBLY)
100 BOTTOM PLATE PORTION
101-104 SIDE PLATE PORTION
2, 7 FIRST RESIN MEMBER
21 FACING SURFACE
23 INCLINED SURFACE
24 LIGHT-BLOCKING PORTION
3, 8 SECOND RESIN MEMBER
31 LOWER INCLINED SURFACE
32 LOWER WALL PORTION
33 UPPER INCLINED SURFACE
34 UPPER WALL PORTION
35 FACING SURFACE
36 FACING SURFACE
4, 9 THIRD RESIN MEMBER
41 FACING SURFACE
43 INCLINED SURFACE
44 LIGHT-BLOCKING PORTION
51, 52 JOINING PORTION
53-58 CONTACT PORTION
610, 620 LASER BEAM
71 INCLINED SURFACE
72 WALL PORTION
81, 82 FACING SURFACE
91 INCLINED SURFACE
92 WALL PORTION

## Claims

1. A welding method for welding a light-transmitting resin member and a light-absorbing resin member by radiating a laser beam while subjecting the light-transmitting resin member and the light-absorbing resin member to pressurization into contact with each other,
one member out of the light-transmitting resin member and the light-absorbing resin member including an inclined surface that is inclined with respect to a direction of the pressurization, the other member including a facing surface that faces the inclined surface,
the welding method comprising welding the light-transmitting resin member and the light-absorbing resin member by bringing the inclined surface and the facing surface into contact with each other by the pressurization of the light-transmitting resin member and the light-absorbing resin member, and radiating the laser beam through the light-transmitting resin member toward a contact portion between the inclined surface and the facing surface in a direction intersecting the direction of the pressurization.

2. The welding method according to claim 1, wherein:
the facing surface has a projecting shape that projects toward the inclined surface; and
when the light-transmitting resin member and the light-absorbing resin member are pressurized, part of the inclined surface and part of the facing surface come into linear contact with each other.

3. The welding method according to claim 2, wherein the facing surface has a convex shape.

4. The welding method according to claim 1, wherein:
the one member includes a wall portion juxtaposed to the inclined surface along a direction perpendicular to the direction of the pressurization; and
when the light-transmitting resin member and the light-absorbing resin member are brought into contact with each other by the pressurization, a portion of the other member that includes the facing surface is disposed between the inclined surface and the wall portion.

5. The welding method according to claim 1, wherein the light-absorbing resin member includes a light-blocking portion that blocks a leakage of the laser beam that deviates from a joining portion with the light-transmitting resin member.

6. A welding method for welding one piece of the light-transmitting resin member to two pieces of the light-absorbing resin member sandwiching the one piece of the light-transmitting resin member,
the welding method comprising simultaneously welding one of the two pieces of the light-absorbing resin member to the one piece of the light-transmitting resin member and welding the other of the two pieces of the light-absorbing resin member to the one piece of the light-transmitting resin member by the welding method according to any one of claims 1 to 5.

7. A welding method for welding one piece of the light-absorbing resin member to two pieces of the light-transmitting resin member sandwiching the one piece of the light-absorbing resin member,
the welding method comprising simultaneously welding one of the two pieces of the light-transmitting resin member to the one piece of the light-absorbing resin member and welding the other of the two pieces of the light-transmitting resin member to the one piece of the light-absorbing resin member by the welding method according to any one of claims 1 to 5.

8. A resin joined assembly comprising a light-transmitting resin member and a light-absorbing resin member that are joined together by melting part of the light-transmitting resin member and part of the light-absorbing resin member by radiation of a laser beam,
wherein a joining portion where the light-transmitting resin member and the light-absorbing resin member are joined together is formed while being inclined with respect to a stacking direction of the light-transmitting resin member and the light-absorbing resin member.

9. A polygonal case including a light-transmitting resin member and a light-absorbing resin member that are joined together by melting part of the light-transmitting resin member and part of the light-absorbing resin member by radiation of a laser beam,
the polygonal case comprising a polygonal bottom plate portion and a plurality of side plate portions extending from the bottom plate portion in a direction perpendicular to the bottom plate portion,
wherein a joining portion where the light-transmitting resin member and the light-absorbing resin member are joined together is formed in each of the plurality of side plate portions while being inclined with respect to the direction perpendicular to the bottom plate portion.
